# EUROPÄISCHE PATENTANMELDUNG

(11) **EP 1 843 007 A1**
(43) Veröffentlichungstag der Anmeldung: **10.10.2007**
(21) Anmeldenummer: 06007331.9
(22) Anmeldetag: 06.04.2006
(51) Int. Cl.: F01D 5/18, B23P 15/04

(54) **Turbinenschaufel mit separatem Abschlusselement**

(71) Anmelder: SIEMENS AKTIENGESELLSCHAFT, 80333 München (DE)
(72) Erfinder: Bergander, Katharina, 13503 Berlin (DE); Bostanjoglo, Georg, Dr., 12161 Berlin (DE); Buchal, Tobias, Dr., 40489 Düsseldorf (DE); Esser, Winfried, Dr., 44805 Bochum (DE); Goldschmidt, Dirk, Dr., 47445 Moers (DE); Koch, Torsten, 46145 Oberhausen (DE); Küperkoch, Rudolf, 45219 Essen (DE); Mattheis, Thorsten, 40878 Ratingen (DE); Münzer, Jan, 10439 Berlin (DE); Müsgen, Ralf, 45147 Essen (DE); Oechsner, Matthias, Dr., 45481 Mülheim an der Ruhr (DE); Pickert, Ursula, 45470 Mülheim and der Ruhr (DE); Vosberg, Volker, Dr., 45476 Mülheim an der Ruhr (DE)

(57) **Zusammenfassung**

Eine Turbinenschaufel (2) umfasst ein sich in Längsrichtung (4) zwischen einem Schaufelfuß und einem Schaufelkopf (6) erstreckendes Schaufelblatt (8), wobei die Seitenwände (12) des Schaufelblatts (8) einen durch mindestens eine Zwischenwand (24) in mindestens zwei Teilräume unterteilten Hohlraum umschließen, und wobei ein erster Teilraum einen ersten Längsabschnitt (40) eines Kühlmittelkanals (20) bildet, der über eine im Bereich des Schaufelfußes oder des Schaufelkopfes (6) angeordnete Umlenkpassage (36) mit einem von einem zweiten Teilraum gebildeten zweiten Längsabschnitt (44) des Kühlmittelkanals (20) verbunden ist. Die Turbinenschaufel (2) soll bei guter Kühlbarkeit für einen besonders einfachen und kostengünstigen Fertigungsprozess ausgelegt sein. Dazu ist erfindungsgemäß vorgesehen, dass ein die Seitenwände (12) und die Zwischenwand (24) umfassender Schaufelhauptkörper (32) integral als Gussteil gefertigt ist, wobei am schaufelfußseitigen und/oder am schaufelkopfseitigen Ende der Turbinenschaufel (2) ein separat hergestelltes Abschlusselement (34) angeordnet ist, das an seiner dem Schaufelinneren zugewandten Unterseite eine die Umlenkpassage (36) begrenzende Umlenkfläche (52) aufweist.

## Beschreibung

Die Erfindung betrifft eine Turbinenschaufel mit einem sich in Längsrichtung zwischen einem Schaufelfuß und einem Schaufelkopf erstreckenden profilierten Schaufelblatt, wobei die Seitenwände des Schaufelblattes einen durch mindestens eine Zwischenwand in mindestens zwei Teilräume unterteilten Hohlraum umschließen, und wobei ein erster Teilraum einen ersten Längsabschnitt eines Kühlmittelkanals bildet, der über eine im Bereich des Schaufelfußes oder des Schaufelkopfes angeordnete Umlenkpassage mit einem von einem zweiten Teilraum gebildeten zweiten Längsabschnitt des Kühlmittelkanals verbunden ist. Die Erfindung betrifft weiter eine Gasturbine mit einer Anzahl von Turbinenschaufeln.

Gasturbinen werden in vielen Bereichen zum Antrieb von Generatoren oder von Arbeitsmaschinen eingesetzt. Dabei wird der Energieinhalt eines Brennstoffes zur Erzeugung einer Rotationsbewegung einer Turbinenwelle genutzt. Der Brennstoff wird dazu in einer Brennkammer verbrannt, wobei von einem Luftverdichter verdichtete Luft zugeführt wird. Das in der Brennkammer durch die Verbrennung des Brennstoffes erzeugte, unter hohem Druck und unter hoher Temperatur stehende Arbeitsmedium wird über eine der Brennkammer nachgeschaltete Turbineneinheit geführt, wo es sich arbeitsleistend entspannt.

Zur Erzeugung der Rotationsbewegung der Turbinenwelle sind an dieser eine Anzahl von üblicherweise in Schaufelgruppen oder Schaufelreihen zusammengefassten Laufschaufeln angeordnet, die über einen Impulsübertrag aus dem Strömungsmedium die Turbinenwelle antreiben. Zur Führung des Strömungsmediums in der Turbineneinheit sind zudem üblicherweise zwischen benachbarten Laufschaufelreihen mit dem Turbinengehäuse verbundene Leitschaufelreihen angeordnet. Die Turbinenschaufeln, d. h. die Laufschaufeln und die Leitschaufeln, weisen üblicherweise zur geeigneten Führung des Arbeitsmediums ein profiliertes, entlang einer Schaufelachse erstrecktes Schaufelblatt auf, an das schaufelfußseitig zur Befestigung der Turbinenschaufel am jeweiligen Trägerkörper eine sich quer zur Schaufelachse erstreckende Plattform angeformt ist. Insbesondere bei Leitschaufeln kann auch am gegenüberliegenden kopfseitigen Ende ein plattformähnliches Formelement angeordnet sein, das den Strömungskanal für das Arbeitsmedium begrenzt.

Zur Erreichung eines besonders günstigen Wirkungsgrades sind derartige Gasturbinen aus thermodynamischen Gründen üblicherweise für besonders hohe Austrittstemperaturen des aus der Brennkammer ab- und in die Turbineneinheit einströmenden Arbeitsmediums von etwa 1200°C bis etwa 1500°C ausgelegt. Bei derartig hohen Temperaturen sind die Komponenten der Gasturbine, insbesondere die Turbinenschaufeln, vergleichsweise hohen thermischen Belastungen ausgesetzt. Um auch bei derartigen Betriebsbedingungen eine hohe Zuverlässigkeit und eine lange Lebensdauer der jeweiligen Komponente zu gewährleisten, sind die betroffenen Bauteile üblicherweise kühlbar ausgebildet.

Dazu sind in modernen Gasturbinen die Turbinenschaufeln üblicherweise als so genanntes Hohlprofil ausgebildet. Das profilierte Schaufelblatt weist dazu in seinem Inneren eine Anzahl von durch Zwischenwände oder Trennwände separierte Hohlräume auf, in denen ein Kühlmedium geführt werden kann. Um mit einem vergleichsweise geringen Bedarf an Kühlmedium möglichst große und weitläufige Bereiche des Schaufelblatts zuverlässig von innen kühlen zu können, sind die derart gebildeten Kühlmittelkanäle üblicherweise mäanderförmig durch das Schaufelinnere geführt. In der Regel weisen zumindest einige der Kühlmittelkanäle daher einen beispielsweise vom Schaufelfuß zum Schaufelkopf durchströmten ersten Längsabschnitt auf, dem über eine im Bereich des Schaufelkopfes angeordnete, im Längsschnitt ungefähr U-förmige Umlenkpassage ein zweiter, vom Schaufelkopf zum Schaufelfuß durchströmter Längsabschnitt kühlmittelseitig nachgeschaltet ist. Entsprechende Umlenkabschnitte, in denen sich die Strömungsrichtung des Kühlmediums ändert, sich insbesondere um etwa 180° umkehrt, können auch im Bereich des Schaufelfußes vorgesehen sein. Insgesamt kann damit das System der Kühlmittelkanäle besonders im Bereich des kopf- und/oder fußseitigen Schaufelendes eine vergleichsweise komplexe Innengeometrie aufweisen, die den Fertigungsprozess für die Turbinenschaufel verkompliziert.

Zur Erreichung einer besonders hohen mechanischen und thermischen Belastbarkeit und strukturellen Stabilität werden derartige Turbinenschaufeln üblicherweise in einem Gießverfahren hergestellt, dem ein mehrstufiger Prozess zur Fertigung der Gießform vorausgeht. Dazu wird in einem ersten Fertigungsschritt eine in ihrer Kontur an das gewünschte Schaufelprofil angepasste Hohlform mit Wachs ausgegossen. Im Fachjargon wird diese Hohlform, die ein Negativabbild der Schaufelaußenkontur darstellt, auch als "Werkzeug" bezeichnet. Als "Platzhalter" für die später in der Turbinenschaufel vorgesehenen Hohlräume und Kühlmittelkanäle sind beim Ausgießen der Hohlform darin so genannte Kernelemente, beispielsweise aus keramischem Material, angeordnet, welche somit in den erstarrenden Wachskörper eingebettet werden. Anschließend wird die äußere Form entfernt und das im ersten Schritt erhaltene Wachsmodell der Turbinenschaufel durch Eintauchen in eine keramische Rohmasse beziehungsweise durch Besprühen mit so genanntem Formsand mit einem Keramiküberzug versehen. Sobald dieser eine ausreichende Dicke aufweist, wird das mit dem Keramiküberzug versehene Wachsmodell ausgebrannt, wobei sich die Keramik verfestigt und das Wachs sich verflüchtigt. Dadurch entsteht eine Keramik-Gießform für die Schaufel, in der auch die Kernelemente für die Kühlmittelkanäle oder andere Hohlräume umfasst sind. In einem weiteren Schritt wird diese keramische Negativ-Gießform mit dem metallischen Schaufelwerkstoff ausgegossen. Nach dem Erstarren der Schmelze und dem Entfernen der schalenartigen äußeren Gießform wird der noch im Schaufelkörper verbliebene Schaufelkern durch Auslaugen mit Natronlauge oder dergleichen entfernt, so dass die für die Kühlmittelkanäle gewünschten Hohlräume entstehen.

Nachteilig bei dem geschilderten Gießverfahren ist, dass gerade bei Turbinenschaufeln mit komplexer Innengeometrie, insbesondere im Bereich der gekrümmten Umlenkpassagen, bereits die Herstellung des korrespondierenden Keramikkerns vergleichsweise aufwändig ist. Hinzu kommt, dass zur Einhaltung der üblicherweise eng vorgegebenen Wanddickentoleranzen der Kern während des Abgusses stabil und sicher gelagert werden muss. Dazu ist in der Regel eine Mehrzahl von mit dem Kern verbundenen Lagerstiften vorgesehen, die über schaufelkopf- und fußseitig, sprich stirnseitig, angeordnete Öffnungen der äußeren Gießform aus dieser herausgeführt und in entsprechenden Halterungskonstruktionen oder Widerlagern eingespannt oder gelagert sind. Zum Ausgleich thermisch bedingter Längenschwankungen während des Gießvorganges sind beispielsweise die schaufelfußseitigen Lagerpunkte als Festlager und die schaufelkopfseitigen Lagerpunkte als Loslager ausgelegt.

Die Halte- oder Lagerstifte können zum Beispiel aus Quarz oder aus Keramik gefertigt sein. Sie werden dann beim Auslaugen des Kernbereiches der gegossenen Turbinenschaufel gemeinsam mit den restlichen Kernbauteilen entfernt. Dadurch verbleiben in den Kopf- oder Fußplatten der Schaufel jedoch unerwünschte Kernaustrittsöffnungen, die anschließend manuell verschlossen werden müssen, um Kühlmittelleckagen an diesen Stellen zu vermeiden. Dies geschieht häufig durch Handschweißung und ist daher entsprechend aufwändig. Alternativ können die Lagerstifte auch aus einem Edelmetall gefertigt sein, welcher sich beim Gießen der Turbinenschaufel mit dem metallischen Schaufelwerkstoff in inniger Weise verbindet und daher in der Art eines "Pfropfens" im fertiggestellten Schaufelkörper verbleibt. Diese Lösung ist jedoch vergleichsweise kostenintensiv.

Schließlich sind die gekrümmten Umlenkpassagen der Kühlmittelkanäle auch in gießtechnischer Hinsicht problematisch, da es in den angrenzenden Randzonen der Schaufelwand durch unerwünschte Materialanhäufung leicht zu Gießfehlern kommen kann.

In einem derartigen Fall ist die komplette Turbinenschaufel als Ausschuss zu betrachten.

Der Erfindung liegt daher die Aufgabe zugrunde, eine Turbinenschaufel der eingangs genannten Art anzugeben, die bei guter Kühlbarkeit mit geringem Kühlmittelbedarf für einen besonders einfachen und kostengünstigen Fertigungsprozess ausgelegt ist. Weiterhin soll eine zugehörige Gasturbine angegeben werden.

Bezüglich der Turbinenschaufel wird die Aufgabe erfindungsgemäß dadurch gelöst, dass ein die Seitenwände und die Zwischenwände umfassender Schaufelhauptkörper integral als Gussteil gefertigt ist, wobei am schaufelfußseitigen und/oder am schaufelkopfseitigen Ende der Turbinenschaufel ein jeweils separat hergestelltes Abschlusselement angeordnet ist, das an seiner dem Schaufelinneren zugewandten Unterseite eine die Umlenkpassage begrenzende Umlenkfläche aufweist.

Die Erfindung geht von der Überlegung aus, dass der größte Teil der Turbinenschaufel für eine besonders hohe mechanische und thermische Belastbarkeit und Stabilität auch weiterhin in bewährter Gießtechnik gefertigt werden sollte. Daher ist nach dem hier vorgestellten Konzept der die Seitenwände und die Zwischenwände im Schaufelinneren sowie gegebenenfalls weitere Strukturteile, wie etwa eine Plattform oder einen Hakensockel, umfassende Schaufelhauptkörper integral, d. h. einkomponentig als Gussteil hergestellt. Der vor allem in fertigungstechnischer Hinsicht problematische Endbereich des Schaufelblatts mit den gekrümmten Umlenkpassagen ist hingegen als separates Bauteil ausgeführt, welches unabhängig vom restlichen Schaufelkörper hergestellt und nötigenfalls nachbearbeitet werden kann und erst im Anschluss daran als Abschlusselement in oder auf den Schaufelkörper eingesetzt beziehungsweise aufgesetzt und mit ihm fest verbunden wird.

Ein derartiges Schaufeldesign bietet insbesondere den Vorteil, dass der für die Fertigung des Schaufelhauptkörpers benötigte Hauptkern im Wesentlichen nur noch Bestandteile mit vergleichsweise einfacher, d. h. geradliniger Geometrie aufweist, wodurch die Kernherstellung deutlich einfacher und kostengünstiger wird. Darüber hinaus kann der Kernaustritt im Kopf- oder Fußbereich der Turbinenschaufel einfacher als bisher gestaltet werden. Wegen der besseren Zugänglichkeit dieser Bereiche kann der Kern während des Gießens auch ohne zusätzliche Edelmetall- oder Quarzstifte stabil und sicher gehalten werden, so dass sich vergleichsweise enge Vorgaben für die Wanddickentoleranzen einhalten lassen. Trotz der Tatsache, dass das Zusammenfügen von Schaufelhauptkörper und separatem Anbauteil einen zusätzlichen Arbeitsschritt bedingt, wird die Fertigung der Turbinenschaufel insgesamt kostengünstiger, da zum einen die bislang notwendigen, aus hochwertigem Material gefertigten und daher relativ teueren Haltestifte entfallen, und da zum anderen, nicht mehr wie bislang, eine Vielzahl von Kernaustrittsöffnungen in der Kopf- oder Fußplatte nachträglich verschlossen werden müssen. Durch die vergleichsweise einfach gehaltene Geometrie des Schaufelhauptkörpers werden Gießfehler bei dessen Herstellung deutlich reduziert; etwaige Gießfehler bei der Herstellung des Abschlusselements betreffen den Schaufelhauptkörper nicht.

Für eine möglichst effektive und verlustfreie Umlenkung des Kühlmittels weist das Abschlusselement an seiner dem Schaufelinneren zugewandten Unterseite vorzugsweise eine Anzahl von gewölbeartigen Vertiefungen auf, die die jeweilige Umlenkpassage begrenzen oder beranden. Zweckmäßigerweise liegt das Abschlusselement in der Art eines Torbogens oder eines Brückenbogens auf den im Schaufelinneren angeordneten Zwischenwänden oder auf vom Schaufelhauptkörper gebildeten oder an ihn angeformten Absätzen auf. Da das jeweilige Abschlusselement somit lediglich Vertiefungen und gegebenenfalls Vorsprünge aufweist, jedoch keinerlei innen liegende Hohlräume besitzt, kann es selbst ebenfalls vergleichsweise einfach als Gussteil hergestellt werden, insbesondere ohne den Einsatz von Kernelementen oder dergleichen.

Für eine Umlenkung des Kühlmittels um ungefähr 180° ist die jeweilige Vertiefung vorteilhafterweise in der Art eines so genannten Rundtonnengewölbes oder Halbkreisgewölbes ausgeführt, so dass sich im Längsschnitt durch die Turbinenschaufel eine etwa U-förmige Strömungsführung vom ersten Längsabschnitt in den durch eine Zwischenwand oder Trennwand vom ersten Längsabschnitt separierten zweiten Längsabschnitt des Kühlmittelkanals ergibt. Die Kühlmittelströmung folgt der gekrümmten Wandfläche des Abschlusselementes, die somit als Umlenkfläche wirksam ist und die Strömungsrichtung vorgibt. Es kann aber auch eine abgeflachte Ausführung der Vertiefung und damit auch der Umlenkfläche, zum Beispiel in der Art eines Segment- oder Stichbogengewölbes, vorgesehen sein. Dabei kann je nach Geometrie und je nach gewähltem Abstand der Umlenkfläche zu der Endkante der von ihr überspannten Trennwand ein zweckmäßiger Drosselquerschnitt für den Kühlmittelmassenstrom festgelegt sein.

Vorteilhafterweise kann durch einen Austausch des Abschlusselementes gegen ein anderes Abschlusselement mit entsprechend geänderter Geometrie der Vertiefung auf eine einfache und kostengünstige Weise eine Veränderung oder Korrektur des freien Strömungsquerschnittes im Bereich der Umlenkpassage und damit des Kühlmitteldurchsatzes durch den Kühlmittelkanal der Turbinenschaufel vorgenommen werden. So ist es beispielsweise möglich, aufgrund von Betriebserfahrungen oder bei betriebsbedingt geänderten Anforderungen an den Kühlmitteldurchsatz den Drosselquerschnitt durch Austausch des Abschlusselementes nachträglich zu verändern, ohne dass dazu eine vergleichsweise aufwändige und teure Anpassung oder Neuentwicklung des Schaufelhauptkörpers notwendig wäre.

Das Abschlusselement solle einerseits unter den in einer Gasturbine üblichen Betriebsbedingungen, insbesondere bei Umgebungstemperaturen von bis zu 1600°C oder mehr und bei betriebsbedingt auftretenden Vibrationen und Erschütterungen oder dergleichen sicher und fest mit dem Schaufelhauptkörper verbunden sein. Andererseits sollte im Bedarfsfall die Austauschbarkeit des Abschlusselementes gewährleistet sein. Dazu ist das Abschlusselement zweckmäßigerweise mit dem Schaufelhauptkörper verschweißt oder verlötet.

Zweckmäßigerweise kommt die Turbinenschaufel in einer Gasturbine zum Einsatz, zum Beispiel als Leit- oder Laufschaufel einer Turbineneinheit. Sie könnte aber auch bei anderen thermischen Strömungsmaschinen, insbesondere bei einer Dampfturbine oder bei einem Strahltriebwerk, Anwendung finden.

Die mit der Erfindung erzielten Vorteile bestehen insbesondere darin, dass durch die separate Fertigung und anschließende Montage der kopf- und/oder fußseitigen Abschlusselemente, die zugleich die Form und Kontur der Umlenkpassagen von innen liegenden Kühlmittelkanälen definieren, eine wesentliche Vereinfachung des Fertigungsprozesses für eine innen gekühlte Turbinenschaufel erreichbar ist. Ebenso werden die Kernherstellung und die Kernhalterung während des Abgusses des integral als Gussbauteil hergestellten Schaufelhauptkörpers vereinfacht und unerwünschte, später manuell zu verschließende Kernaustrittsöffnungen vermieden. Darüber hinaus treten Gießfehler seltener auf, wodurch sich die Ausschussraten reduzieren.

Ein Ausführungsbeispiel der Erfindung wird anhand einer Zeichnung näher erläutert. Darin zeigen:
- FIG 1: einen Ausschnitt aus einem Längsschnitt durch eine Turbinenschaufel gemäß einer ersten Ausführungsform, und
- FIG 2: einen Ausschnitt aus einem Längsschnitt durch eine Turbinenschaufel gemäß einer zweiten Ausführungsform.

Gleiche Teile sind in beiden Figuren mit denselben Bezugszeichen versehen.

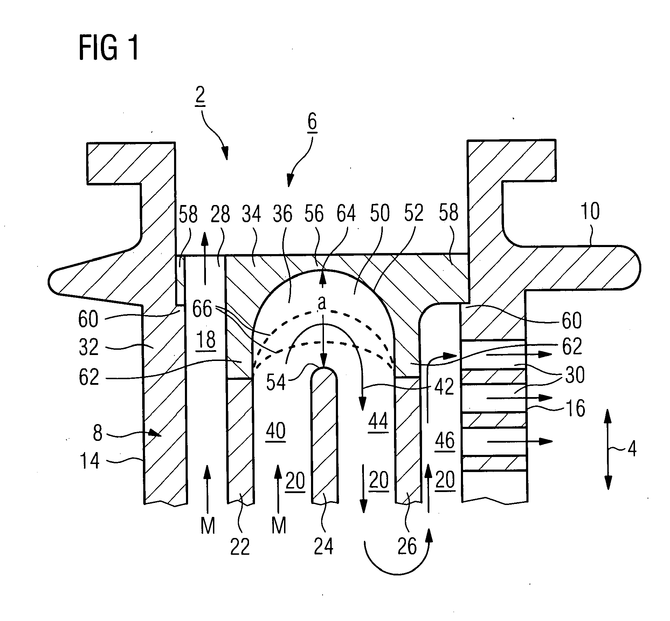

Die in FIG 1 ausschnittsweise im Längsschnitt dargestellte Turbinenschaufel 2 umfasst ein sich in Längsrichtung 4 zwischen einem (hier nicht mehr sichtbaren) Schaufelfuß und einem Schaufelkopf 6 erstreckendes Schaufelblatt 8 mit einer endseitig angeformten Plattform 10. Die Außenkontur des profilierten Schaufelblatts 8 wird durch eine druckseitige und eine saugseitige Seitenwand 12 gebildet. Die beiden Seitenwände laufen anströmseitig zu einer abgerundeten Vorderkante 14 und abströmseitig zu einer flachen Hinterkante 16 zusammen.

Für den Einsatz in einer Gasturbine, bei der das an der Schaufelaußenseite entlang strömende Arbeitsmedium Temperaturen bis zu 1300°C oder mehr aufweist, ist die Turbinenschaufel 2 kühlbar ausgestaltet. Dazu bildet die Turbinenschaufel 2 ein so genanntes Hohlprofil. Das heißt, die beiden Seitenwände des Schaufelblatts 8 umschließen eine Anzahl von mit einem Kühlmedium M beaufschlagbaren Hohlräumen im Schaufelinneren. Zur Abgrenzung der Hohlräume voneinander und zur Ausbildung eines Systems von Kühlmittelkanälen 18, 20 ist eine Anzahl von Zwischenwänden 22, 24, 26 im Schaufelinneren angeordnet, die sich von Seitenwand zu Seitenwand erstrecken und dem Schaufelblatt 8 damit in der Art einer Wabenstruktur gleichsam strukturelle Stabilität verleihen.

Der Einlass des Kühlmittels M, hier Kühlluft, erfolgt über (hier nicht dargestellte) Einlassöffnungen im Schaufelfuß. Nachdem das Kühlmittel M die zum Teil mäanderförmig im Schaufelinneren verlaufenden Kühlmittelkanäle 18, 20 durchströmt hat, wobei es durch überwiegend konvektive Wärmeübertragung Wärme von den Schaufelwänden aufnimmt und abtransportiert, verlässt es die Turbinenschaufel 2 über in die Schaufelwand eingebrachte Auslasskanäle 28, 30, zum Beispiel im Bereich der Hinterkante 16, und über so genannte Filmkühlöffnungen (hier nicht dargestellt). Trotz der beim Durchströmen der Kühlmittelkanäle 18, 20 aufgenommenen Wärmemenge ist das aus den Filmkühllöchern austretende Kühlmittel M immer noch erheblich kühler als das die Turbinenschaufel 2 umströmende Arbeitsmedium, so dass sich ein die Schaufeloberfläche vor unmittelbarem Kontakt mit dem heißen Arbeitsmedium schützender Kühlmittelfilm ausbilden kann.

Die Turbinenschaufel 2 umfasst für einen vereinfachten Fertigungsprozess zwei unabhängig voneinander hergestellte und anschließend miteinander verbundene Komponenten, nämlich einen im Feingießverfahren hergestellten Schaufelhauptkörper 32, der neben den Seitenwänden des Schaufelblatts 8 und den innen liegenden Zwischenwänden 22, 24, 26 auch die an das Schaufelblatt 8 angeformte kopfseitige Plattform 10 und die fußseitige Plattform mit einem Hakensockel (nicht dargestellt) zur Befestigung in der Turbine umfasst sowie ein im Bereich des Schaufelkopfes 6 angeordnetes Abschlusselement 34. Der vom Schaufelhauptkörper 32 teilweise umschlossene Hohlraum, der durch die Zwischenwände 22, 24, 26 in verschiedene Teilräume unterteilt ist, besitzt eine vergleichsweise einfache Innengeometrie mit im Wesentlichen geradlinigen Konturen. Damit ist der Aufwand für die Erstellung der zugehörigen Gießform besonders gering gehalten. Auch die Halterung der so genannten Kernelemente, die sich während des Abgusses anstelle der späteren Hohlräume in der Gießform befinden, ist erleichtert, da das kopfseitige Abschlusselement 34 nicht mit dem'restlichen Schaufelkörper 32 mitgegossen wird und aus diesem Grund der Kopfbereich des Schaufelhauptkörpers 32 besser zugänglich ist.

Das Abschlusselement 34 dichtet das System der Kühlmittelkanäle 18, 20 zum Schaufelkopf 6 hin nach außen ab und bildet zugleich die äußere Begrenzung einer Umlenkpassage 36 für das durch den Kühlmittelkanal 20 strömende Kühlmittel M. Im Ausführungsbeispiel weist die Turbinenschaufel 2 zwei kühlmittelseitig parallel geschaltete Kühlmittelkanäle 18, 20 auf, die über jeweils im Schaufelfuß angeordnete Einlassöffnungen bespeist werden. Der erste Kühlmittelkanal 18 versorgt im Bereich der Vorderkante 14 angeordnete, hier nicht dargestellte Kühlmittelöffnungen, so genannte Showerhead-Bohrungen, mit Kühlluft. Die restliche, nicht zuvor zur Versorgung der Showerhead-Bohrungen abgezweigte Kühlluft tritt durch einen in das Abschlusselement 34 eingebrachten Austrittskanal 28 aus und kühlt die Schaufelkopfregion.

Ein zweiter Kühlmittelkanal 20 windet sich mäanderartig durch das Schaufelinnere. Zuerst durchströmt das Kühlmittel M einen von einem ersten Teilraum gebildeten, sich in Längsrichtung 4 erstreckenden Längsabschnitt 40 in der durch Strömungspfeile 42 angedeuteten Strömungsrichtung vom Schaufelfuß zum Schaufelkopf 6, wird dann in der Umlenkpassage 36 im Bereich des Schaufelkopfes 6 um 180° umgelenkt und tritt anschließend in einen zweiten, von einem zweiten Teilraum gebildeten und vom Schaufelkopf 6 zum Schaufelfuß durchströmten Längsabschnitt 44 ein. Der erste Längsabschnitt 40 des mäanderförmigen Kühlmittelkanals 20 ist durch die Zwischenwand 22 von dem an die Vorderkante 14 des Schaufelblatts 8 angrenzenden Kühlmittelkanal 18 und durch die Zwischenwand 24 vom zweiten Längsabschnitt 44 separiert. Am fußseitigen Ende des zweiten Längsabschnittes 44 wird das Kühlmittel M erneut um 180° umgelenkt und tritt schließlich in einen wiederum vom Schaufelfuß zum Schaufelkopf 6 durchströmten dritten Längsabschnitt 46 ein, der seinerseits durch die Zwischenwand 26 vom zweiten Längsabschnitt 44 getrennt ist. Über die im Bereich der Hinterkante 16 angeordneten Austrittskanäle 30, gegebenenfalls auch bereits zuvor über hier nicht dargestellte Filmkühlöffnungen in den Seitenwänden des Schaufelblatts 8, tritt das Kühlmittel aus der Turbinenschaufel 2 aus und vermischt sich anschließend mit dem durch den Strömungskanal der Gasturbine strömenden Arbeitsmedium.

Zur Bildung der kühlmittelseitig zwischen den ersten Längsabschnitt 40 und den zweiten Längsabschnitt 44 des Kühlmittelkanals 20 geschalteten Umlenkpassage 36 weist das Abschlusselement 34 an seiner dem Hohlprofil zugewandten Unterseite eine gewölbeartige Vertiefung 50 auf. Der Kühlmittelstrom folgt der im Längsschnitt im Wesentlichen halbkreisförmigen Kontur der Umlenkfläche 52 und wird daher - über die Endkante 54 der Zwischenwand 24 hinweg - vergleichsweise effektiv und ohne nennenswerten Druckverlust um 180° umgelenkt. Das passgenau in die Endausnehmung des Schaufelhauptkörpers 32 am kopfseitigen Ende der Türbinenschaufel 2 eingesetzte Abschlusselement 34 hat eine einer Brücke ähnliche Gestalt mit einem die Umlenkpassage 36 definierenden Hauptbogen 56 und mit zwei seitlich abstehenden Auslegern 58. Mit den beiden Auslegern 58 liegt das Abschlusselement 34 auf korrespondierenden Vorsprüngen 60 des Schaufelhauptkörpers 32 auf; die beiden "Brückenpfeiler" (d. h. die Stege 62) stützen sich spaltfrei auf den Zwischenwänden 22 und 26 ab. Im Ausführungsbeispiel ist das Abschlusselement 34 in seinen Sitz im Schaufelhauptkörper 32 eingeschweißt oder eingelötet, wobei die Kühlmittelkanäle 18, 20 gegeneinander und nach außen hin abgedichtet sind.

Der Abstand a zwischen der Endkante 54 der Zwischenwand 24 und dem Scheitelpunkt 64 des Bogens 56 legt den freien Strömungsquerschnitt in der Umlenkpassage 36 fest. Durch eine geänderte Kontur des Bogenverlaufs, zum Beispiel entlang einer der beiden in FIG 1 gestrichelt gezeichneten Linien (Drosselkontur 66), kann eine Drosselstelle für den Kühlluftmassenstrom verwirklicht werden. Dazu muss lediglich das Abschlusselement 34 angepasst werden; eine Anpassung des Schaufelhauptkörpers 32 ist nicht erforderlich. Dies ermöglicht eine schnelle und kostengünstige Korrektur des Kühlluftdurchsatzes bereits in der Entwicklungsphase der Turbinenschaufel 2 oder später aufgrund von Betriebserfahrungen oder bei geänderten Kühlungsanforderungen.

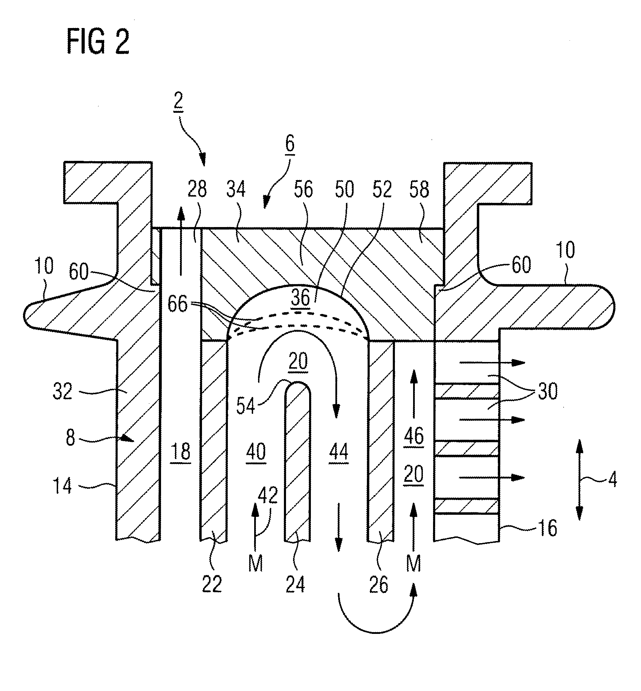

Die bislang zur FIG 1 gemachten Ausführungen gelten prinzipiell auch für die in FIG 2 dargestellte Variante, bei der das Abschlusselement 34 jedoch weiter als bei der Variante gemäß FIG 1 zum kopfseitigen Ende der Turbinenschaufel 2 hin verschoben angeordnet ist und damit vollständig außerhalb des eigentlichen Schaufelblatts 8 liegt. Dementsprechend sind auch die als Auflager wirksamen Endkanten der Zwischenwände 22,26 weiter zum kopfseitigen Ende der Turbinenschaufel 2 hin herausgeführt als bei der Ausführungsform in FIG 1, während die "Brückenpfeiler" des Abschlusselementes 34 verkürzt ausgeführt sind. Durch eine derartige oder ähnliche Variation der Bauteilgeometrie können insbesondere unterschiedliche Vorgaben bezüglich der radialen Bauhöhe der Turbinenschaufel 2 o. ä. berücksichtigt werden.

Es versteht sich von selbst, dass der Fachmann zahlreiche Veränderungen an der Geometrie von Schaufelhauptkörper 32 und Abschlusselement 34 und deren gegenseitiger Anordnung vornehmen kann, ohne von dem in den Patentansprüchen spezifizierten erfinderischen Konzept abzuweichen. Insbesondere können je nach Anzahl und Anordnung der Kühlmittelkanäle, d. h. je nach vorgesehener Strömungsführung im Schaufelinneren, auch mehrere Vertiefungen 50 zur Ausbildung mehrerer Umlenkpassagen 36 nebeneinander im Abschlusselement 34 angeordnet sein. Alternativ oder zusätzlich zu einem schaufelkopfseitig angeordneten Abschlusselement 34 kann auch ein fußseitiges Abschlusselement von analoger Bauart vorgesehen sein.

## Patentansprüche

1. Turbinenschaufel (2) mit einem sich in Längsrichtung (4) zwischen einem Schaufelfuß und einem Schaufelkopf (6) erstreckenden profilierten Schaufelblatt (8),
wobei die Seitenwände des Schaufelblattes (8) einen durch mindestens eine Zwischenwand (24) in mindestens zwei Teilräume unterteilten Hohlraum umschließen, und
wobei ein erster Teilraum einen ersten Längsabschnitt (40) eines Kühlmittelkanals (20) bildet, der über eine im Bereich des Schaufelfußes oder des Schaufelkopfes (6) angeordnete Umlenkpassage (36) mit einem von einem zweiten Teilraum gebildeten zweiten Längsabschnitt (44) des Kühlmittelkanals (20) verbunden ist,
**dadurch gekennzeichnet, dass**
ein die Seitenwände und die Zwischenwand (24) umfassender Schaufelhauptkörper (32) integral als Gussteil gefertigt ist,
wobei am schaufelfußseitigen und/oder am schaufelkopfseitigen Ende der Turbinenschaufel (2) ein separat hergestelltes Abschlusselement (34) angeordnet ist, das an seiner dem Schaufelinneren zugewandten Unterseite eine die Umlenkpassage (36) begrenzende Umlenkfläche (52) aufweist.

2. Turbinenschaufel (2) nach Anspruch 1,
deren Abschlusselement (34) an seiner Unterseite eine die beiden Teilräume des Kühlmittelkanals (20) überspannende gewölbeartige Vertiefung (50) aufweist.

3. Turbinenschaufel (2) nach Anspruch 2,
wobei die Vertiefung (50) in der Art eines Halbkreisgewölbes oder eines Stichbogengewölbes ausgeführt ist.

4. Turbinenschaufel (2) nach einem der Ansprüche 1 bis 3, deren Abschlusselement (34) an seiner Unterseite in der Art eines Torbogens oder eines Brückenbogens auf im Schaufelinneren angeordneten Zwischenwänden (22, 26) und/oder auf vom Schaufelhauptkörper (32) gebildeten oder an ihn angeformten Absätzen oder Vorsprüngen (60) aufliegt.

5. Turbinenschaufel (2) nach einem der Ansprüche 1 bis 4, wobei der freie Strömungsquerschnitt zwischen der Umlenkfläche (52) des Abschlusselementes (34) und der ihr zugewandten Endkante (54) der den ersten Längsabschnitt (40) vom zweiten Längsabschnitt (44) trennenden Zwischenwand (24) kleiner ist als der Strömungsquerschnitt des jeweiligen Längsabschnittes (40, 44) des Kühlmittelkanals (20).

6. Turbinenschaufel (2) nach einem der Ansprüche 1 bis 5, bei der das Abschlusselement (34) mit dem Schaufelhauptkörper (32) verschweißt oder verlötet ist.

7. Gasturbine mit einer Anzahl von Turbinenschaufeln (2) nach einem der Ansprüche 1 bis 6.
